# EUROPEAN PATENT APPLICATION

(11) **EP 4 422 190 A1**
(43) Date of publication of application: **28.08.2024**
(21) Application number: 24157201.5
(22) Date of filing: 12.02.2024
(51) Int. Cl.: H04N 23/57, B60R 11/04

(54) **CAMERA HOLDER FOR AUTOMOTIVE CAMERAS**

(30) Priority: 23.02.2023 IN 202341012319; 30.06.2023 DE 102023206239
(71) Applicant: Continental Autonomous Mobility Germany GmbH, 85057 Ingolstadt (DE)
(72) Inventor: Munk, Dieter, 88131 Lindau (DE); Viveki, Ishwar, 560100 Bangalore (IN)
(74) Representative: Continental Corporation

(57) **Abstract**

The invention relates to a Camera holder (1) comprising at least two camera housings (2) for receiving an automotive camera in each housing (2) and a backside clip (3), to fix each camera in the respective housing (2), wherein the camera housings (2) and the backside clip (3) are arranged in a common camera bracket. The backside clip (3) is hereby built as one part and is designed to fix each camera in the respective housing (2) simultaneously.

## Description

The invention relates to a camera holder for automotive cameras.

It is known from the state of the art to have a camera holder which uses connected housings when there is more than one camera.

### Object of the invention

It is an object of the invention to provide a camera holder which facilitates mounting multiple cameras in a bracket, and which is more cost efficient.

### Description of the invention

First considerations were that the camera position is always different for every vehicle. If the camera position is driven by the backside clip, the housing tool can be reused for several vehicles.

Also, the camera position needs to follow the low tolerances with the backside clip. The accuracy is driven by the windscreen bracket.

According to the invention a camera holder is proposed comprising at least two camera housings for receiving an automotive camera in each housing and a backside clip, to fix each camera in the respective housing, wherein the camera housings and the backside clip are arranged in a common camera bracket. According to the invention the backside clip is built as one part and is designed to fix each camera in the respective housing simultaneously.

The invention is not limited to two camera housings but can be used for three or even more camera housings. The backside clip then needs to be adapted accordingly to match the number of used cameras or camera housings respectively. The backside clip also comprises features, like clips or springs, to fix the backside clip to the camera housings.

For mounting the camera holder in the bracket, first the camera housings are placed on the bracket. Then the respective cameras are inserted in the respective housings and are then fixed by the backside clip at simultaneously by pushing the common backside clip against the backs of each camera.

The common camera bracket is a bracket which can be attached e.g., on the inside of a windshield of a vehicle.

In a preferred embodiment of the invention the at least two camera housings are separated from each other and fixed individually at the camera bracket. Having separated camera housings makes it more feasible to mount the housings on the bracket.

In a further preferred embodiment, the backside clip is adapted to a distance between and/or a position of the at least two camera housings. This is advantageous since the mounting positions of the housings can be different for several use cases, e.g., different vehicles. It is possible that at least one of the housings has a different vertical position than the at least one other housing. In this case, the backside clip also needs to be adapted to this scenario.

In a preferred embodiment of the invention the backside clip is made of a plastics material or a metal material or a combination thereof. In a combination the main part could be e.g., made of a plastics material and certain features, like spring elements, could be made of a metal material or vice versa.

It is further preferred that the backside clip has multiple spring elements which are arranged for fixing the position of the respective camera in the respective housing. The spring elements are arranged to match the openings of the respective housings. Therefore, the spring elements need to be arranged to match the distance between the housings to ensure that the cameras can be fixed in the right position by the common backside clip.

### Brief description of the drawings

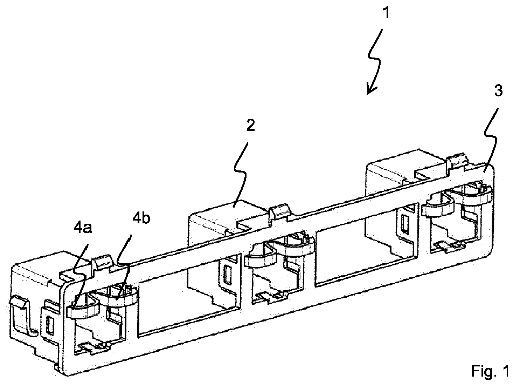

Fig. 1 shows a schematic view of a camera holder according to an embodiment of the invention.

### Detailed description of the drawings

Figure 1 shows a schematic view of a camera holder according to an embodiment of the invention. The camera holder 1 comprises in this example three camera housings 2 which are separated and spaced from each other. Further the camera holder 1 comprises a common backside clip 3 which extends over each of the separated camera housings 2. The backside clip 3 additionally has spring elements 4a, 4b which are arranged for fixing the position of the respective camera in the respective housing 2. As it can be seen here, the spring elements 4a, 4b match in their position the position of the housings 2. The spring elements 4a, 4b are not limited to two elements as shown here. The number spring elements 4a, 4b can be adjusted to provide a sufficient force for fixing the cameras inside the housings 2.

## Claims

1. Camera holder (1) comprising at least two camera housings (2) for receiving an automotive camera in each housing (2) and a backside clip (3), to fix each camera in the respective housing (2), wherein the camera housings (2) and the backside clip (3) are arranged in a common camera bracket,
**characterized in that**
the backside clip (3) is built as one part and is designed to fix each camera in the respective housing (2) simultaneously.

2. Camera holder (1) according to claim 1,
**characterized in that**
the at least two camera housings (2) are separated from each other and fixed individually at the camera bracket.

3. Camera holder (1) according to claim 1,
**characterized in that**
the backside clip (3) is adapted to a distance between and/or a position of the at least two camera housings (2).

4. Camera holder (1) according to claim 1,
**characterized in that**
the backside clip (3) is made of a plastics material or a metal material or a combination thereof.

5. Camera holder (1) according to claim 1,
**characterized in that**
the backside clip (3) has multiple spring elements (4a, 4b) which are arranged for fixing the position of the respective camera in the respective housing (2).
